Europäisches Patentamt

European Patent Office

Office européen des brevets

(11) Publication number: **0 304 559 B1**

# EUROPEAN PATENT SPECIFICATION

(45) Date of publication of patent specification: **29.04.92**   (51) Int. Cl.⁵: **B23K 26/02**, A24C 5/60

(21) Application number: **88108671.4**

(22) Date of filing: **31.05.88**

(54) **Method and device for perforating cigarettes, and the like, by means of laser rays.**

(30) Priority: **24.07.87 IT 1252487**

(43) Date of publication of application:
**01.03.89 Bulletin  89/09**

(45) Publication of the grant of the patent:
**29.04.92 Bulletin  92/18**

(84) Designated Contracting States:
**DE FR GB**

(56) References cited:
**FR-A- 2 403 034
FR-A- 2 464 658
FR-A- 2 524 773**

**PATENT ABSTRACTS OF JAPAN, vol. 7, no. 287 (M-264)[1432], 21st October 1983, page 149 M 264; & JP-A-58 162 384 (KAWAZAKI JUKOGYO K.K.) 27-09-1983**

(73) Proprietor: **SASIB S.p.A.
Via di Corticella, 87/89
I-40128 Bologna(IT)**

(72) Inventor: **Mangiarotti, Luigi
Via Malcontenti 5
I-40121 Bologna(IT)**
Inventor: **Balletti, Leonardo
Via Seminario 36
I-40068 S. Lazzaro di Savena(IT)**
Inventor: **Scagliarini, Agostino
Via Cimitero Vecchio 18
I-40010 S. Giovanni in Persiceto(IT)**

(74) Representative: **Porsia, Bruno et al
c/o Succ. Ing. Fischetti & Weber Via Caffaro 3/2
I-16124 Genova(IT)**

Rank Xerox (UK) Business Services
(-/2.18/2.0)

# Description

The invention relates to a method for perforating cigarettes, or the like, by means of laser rays and by causing each cigarette to be moved relatively to at least one stationary laser rays perforating head, so as to have a ring of holes made in the cigarette wrapper all around the same.

A method of this type is known from the document FR-A1-2 403 034. In this case, the cigarette is accomodated in a peripheral suction flute of a rotary conveying drum, and is conveyed by this drum at a stationary laser rays perforating head, where the cigarette is caused to contact a surface which may be stationary, or may be movable in the opposite direction to the peripheral surface of the rotary conveying drum, and is arranged in facing relation with the said drum peripheral surface. The cigarette is therefore taken between two opposed surfaces which are relatively movable in respect of each other, so that the cigarette is turned around its longitudinal axis, and gets out of the suction flute of the rotary conveying drum, and remains at standstill in front of the stationary laser rays perforating head. After at least one turning round of the cigarette having been completed, during which the cigarette wrapper is being provided with a ring of holes all around the same, and the cigarette is rolling backward on the peripheral surface of the rotary conveying drum, the cigarette is received in a successive suction flute of the rotary conveying drum, and by this drum the cigarette is further carried past the laser rays perforating head. The drawback of this method is that some tobacco does come out of the cigarette open end as the cigarette is being rolled between the said two opposed, relatively movable surfaces.

From the documents FR-A1-2 464 658 and FR-A1-2 524 773 is known that the cigarettes are each accomodated in one respective peripheral suction flute of a rotary conveying drum, in such a manner that each cigarette will freely project by one end portion thereof from one end side of the respective flute of the rotary drum. The holes are made in the freely projecting end portion of each cigarette by one laser rays perforating head comprising a laser rays emitting source and a set of mirrors arranged in a circle around the longitudinal axis of the cigarette. According to the method as disclosed in the document FR-A1-2 464 658, the laser light from the laser light emitting source is simultaneously directed against all of the mirrors in the circle-arranged set of mirrors, and the rays being reflected from these mirrors, will simultaneously perforate each cigarette wrapper over the whole periphery of the cigarette. Conversely, according to the method as disclosed in the document FR-A1-2 524 773, a laser ray from the laser rays emitting source is so rotated that the same will hit the mirrors in the circle-arranged set of mirrors the one after the other, so that the holes in the wrapper at the projecting end portion of each cigarette, will be individually made the one after the other.

In the document JP-A-58-162 384 a method is provided for performing an evenly clear scratching on the whole surface of a flat material. According to this method a laser beam is focused on a rotary reflector in such a way as to irradiate the laser beam onto the material to be scratched, through a large number of optical fibers. The optical fibers have their inlet ends arranged in a circle around the rotary reflector, and their outlet ends arranged along a straight line over the flat material to be scratched.

The object of the invention is to find a method of the kind as disclosed at the outset, by which the perforation of cigarettes by means of laser rays will be effected without causing the cigarettes to turn around their longitudinal axis, and which can be carried out with economical devices of a simple construction.

This problem is solved by the invention with the provision of a method comprising the steps as stated in claim 1.

Therefore, according to the invention, the holes in the cigarette wrapper are made by means of laser rays, at first in the one half of the cigarette cross-section, and then in the other half of the cigarette cross-section, and during both of these two cigarette-perforating steps, the cigarette is held stationary relative to a cigarette-conveying movable support. Thus, the cigarettes are no more turned around their axis, and any drawback arising from such a turning round of the cigarettes, is eliminated.

The cigarettes are neither turned to expose the second half to be perforated of the cigarette cross-section, after the first half of their cross-section having been perforated, since for this purpose the cigarettes are simply transferred from a first cigarette-conveying movable support to a second cigarette-conveying movable support facing the first, such as, for example, from a first fluted suction drum to a successive, second, fluted suction drum. Such a kind of cigarette transfer can be made with much smaller stresses and risks of damaging the cigarettes than those connected with the cigarettes being caused to turn round.

The holes in the cigarette wrapper, to be made in each one of the cigarette cross-section halves, may be made either simultaneously, or sequentially the one after the other, while a cigarette is being conveyed along the respective first and second path.

The method of the invention for perforating cigarettes, may be carried out with any suitable device. Preferably, however, according to the invention, a device is used which comprises the combination of features as stated in claim 6.

According to one preferred embodiment of the invention, the means for guiding the laser rays between the respective emitting source and the perforating heads at least partly consist of bundles of optical fibres, and the laser light emitting source consists of an either continuous or discontinuous emitting source generating a laser light which is adapted for being conveyed by means of fibre optic, particularly a laser light having a wavelength between 1 and 1.5 micron. Thus, an economical device of a simpler construction is obtained, since to guide and transmit the laser light, any optical systems having a complicated structure and/or a great number of components are eliminated or at least sensibly reduced, which particularly at the wavelength of the laser rays as used up to now for perforating cigarettes, must be made with special glasses, and require highly costly manufacturing techniques and surface treatments. According to the invention, thanks to the use of fibre optic for the transmission of laser light, and thanks to the use of sources emitting a laser light which is adapted for being transmitted by means of fibre optic, in addition to the optical systems having been eliminated or substantially reduced, the possibly still necessary remaining optical systems may be made with normal glasses, which are more economical and do not require any particular manufacturing technique and any special surface treatment.

In one embodiment of the device according to the invention, the laser rays emitting means of each perforating head are arranged the one after the other in the direction of the cigarette movement, and are so oriented and focalized as to generate laser rays hitting the exposed half of the cross-section of a cigarette passing in front of the perforating head, at angularly spaced apart different points, during a predetermined cigarette step in front of the perforating head, while the means for distributing the laser ray or rays generated by the emitting source are so provided that they feed the one after the other the laser rays emitting means of each perforating head during the said cigarette step.

In another embodiment of the device according to the invention, the laser rays emitting means of each perforating head are arranged the one after the other in the direction of the cigarette movement, and are so oriented and focalized as to generate laser rays hitting the exposed half of the cross-section of a cigarette passing in front of the perforating head, at angularly spaced apart different points, yet simultaneously, and in only one position of the cigarette in front of the perforating head, while the means for distributing the laser ray or rays generated by the emitting means of each perforating head in the said position of the cigarette.

Two embodiments of the device for carrying out the method according to the invention are diagrammatically shown by way of examples in the accompanying drawings, in which:

Figure 1 shows a first embodiment of the device, according to the invention, for perforating cigarettes by means of laser rays.

Figures 2 and 3 are sectional views in an enlarged scale showing the two perforating heads of the device according to Figure 1.

Figure 4 shows another embodiment of the device according to the invention.

Figure 5 is a view in an enlarged scale, with parts in section, showing a perforating head of the device according to Figure 4.

In the Figures, numerals 1 and 2 denote two fluted drums for conveying cigarettes S. The drums 1 and 2 are, for example, rotated in the direction of arrows F1 and F2 and are peripherally provided with flutes, in each one of which a cigarette S can be accomodated. The cigarettes S may be held by suction in the flutes of drums 1 and 2, as well known by those skilled in the art. In both of the shown embodiments, the cigarettes S fed to the first rotary fluted drum 1 are carried by this drum, transversely to their axis, over a certain arcuate path and are then handed over and transferred to the second rotary fluted drum 2, by which they are carried, transversely to their axis, over a further arcuate path. In correspondence of the path of cigarettes S on the first rotary fluted drum 1, a first laser rays perforating head T1 is provided. Similarly, in correspondence of the path of cigarettes S on the second rotary fluted drum 2, a second laser rays perforating head T2 is provided. It is apparent that the cigarettes S carried by the first drum 1 have one half of their cross-section turned outwardly, and then toward the first perforating head T1, whereas, after having been transferred to the second drum 2 and while being carried by this latter drum, they have the other half of their cross-section turned outwardly, and the toward the second perforating head T2. Therefore, the cigarettes S passing in front of the first perforating head T1, are provided with holes in their wrappers, in correspondence of one half of their cross-section, and soon afterwards the cigarettes S passing in front of the second perforating head T2, are provided with holes in their wrappers, in correspondence of the other half of their cross-section. Thus, the cigarettes S are provided each with a ring of holes made in their cigarette wrapper all around a cigarette.

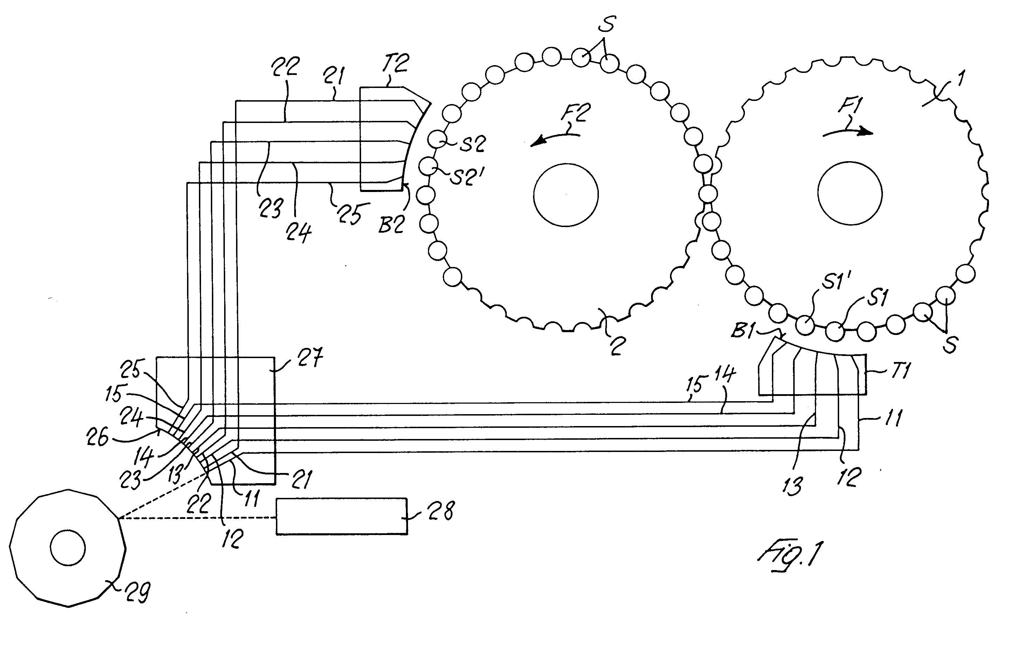

Each perforating head T1,T2 has a concave surface B1,B2 turned toward the respective drum 1,2. The outlet ends of bundles of optical fibres which in the embodiment according to Figures 1 to 3, are designated by 11-15 for the first perforating head T1, and by 21-25 for the second perforating head T2, terminate on the said concave surface, each with a focusing lens L. The outlet ends of the bundles of optical fibres 11-15 and 21-25, which are provided with the focusing lenses L, are arranged on the concave surface B1,B2 of the respective perforating head T1,T2 the one after the other in the direction of movement of cigarettes S passing in front of the respective perforating head T1,T2.

In the embodiment according to Figures 1 to 3, the inlet ends of the bundles of optical fibres 11-15 and 21-25 associated with the two perforating heads T1 and T2, open on to the concave surface 26 of a distributor 27 provided in a unit together with a laser light emitting source 28. The inlet ends of the bundles of optical fibres 11-15 and 21-25 are located in a spaced apart relation along the same arc of the concave surface 26 of distributor 27. Moreover, on the concave surface 26 of distributor 27, the inlet ends of the bundles of optical fibres 11-15 associated with the first perforating head T1 are alternated with the inlet ends of the bundles of optical fibres 21-25 associated with the second perforating head T2, as it clearly appears in Figure 1. A rotary polygonal reflector 29 is arranged before and co-axially to the concave cylindrical surface 26 of distributor 27. The laser light emitting source 28 is a continuous source, and the laser ray being continuously emitted from this source 28 is so reflected by each one of the mirrors provided on the sides of the rotary polygonal reflector 29, that it sweeps the arc along which the inlet ends of the bundles of optical fibres 11-15 and 21-25 are arranged on the cylindrical concave surface 26 of distributor 27. The speed of rotation of the polygonal reflector 29 is such that each one of its sides causes the laser ray from the continuously emitting source 28 to sweep the whole arc along which the inlet ends of the bundles of optical fibres 11-15 and 21-25 are arranged, in a time during which a cigarette S is carried by the drum 1,2 over a certain path in front of the respective perforating head T1,T2, for example, from the position S1 to the position S1′ on the first drum 1 and simultaneously from the position S2 to the position S2′ on drum 2. Thus, while the first drum 1 is moving a cigarette S in front of the first perforating head T1 from the position S1 to the position S1′, and at the same time the second drum 2 is moving another cigarette S in front of the second perforating head T2 from the position S2 to the position S2′, a laser ray being deflected by one of the sides of the polygonal reflector 29, scours all the inlet ends of the bundles of optical fibres 11-15 and 21-25 and is conveyed by these bundles of optical fibres 11-15 and 21-25 sequentially (and in an alternate manner for the two perforating heads T1 and T2) as far as the outlet ends of the bundles of optical fibres 11-15 and 21-25, thus issuing through the respective focusing lenses L.

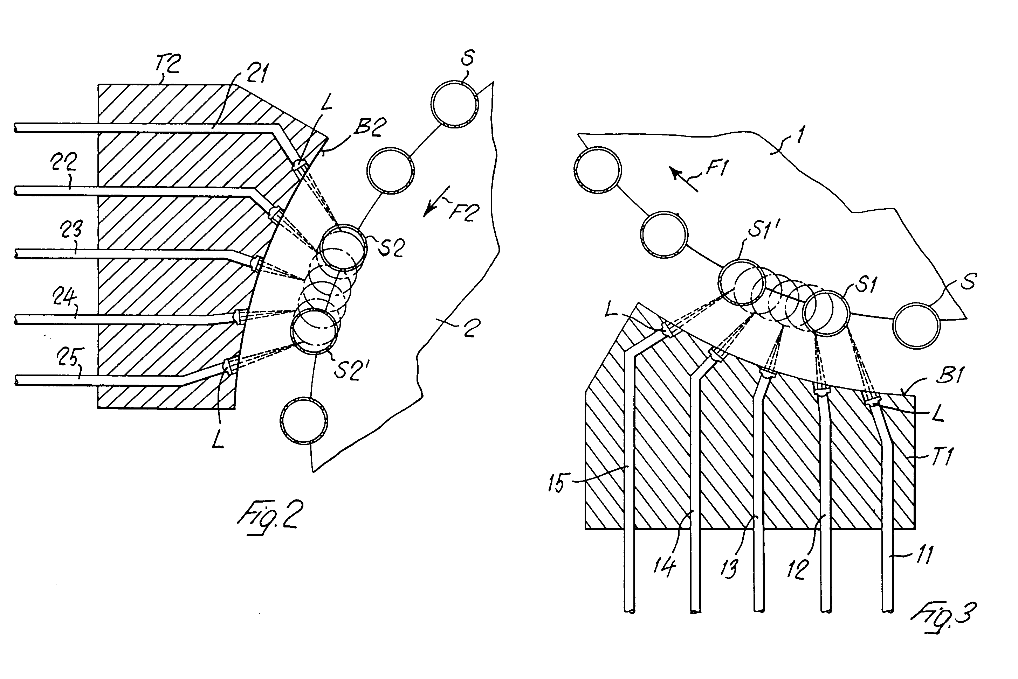

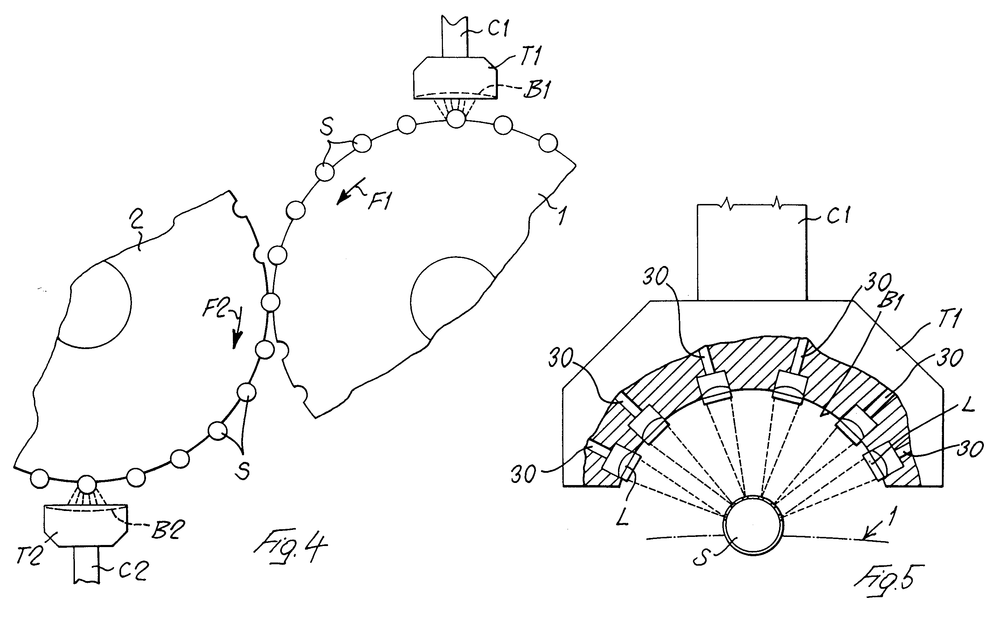

The laser rays issuing from the focusing lenses L at the outlet ends of the bundles of optical fibres 11-15 and 21-25 on the inward surfaces of the two perforating heads T1 and T2, are oriented and focalized in such a manner that at each passage of the laser ray over the inlet ends of the two bundles of optical fibres 11-15 and 21-25 in correspondence of the distributor 27, the following operation shown in figures 2 and 3, is attained.

The laser ray which is at first sent through the bundle of optical fibres 11 to the first perforating head T1, hits the cigarette in the position S1 on a point, for example a lateral point of the exposed half of its cross-section, thus making a first hole therein. Soon afterwards, the laser ray is conveyed through the bundle of optical fibres 21 to the second perforating head T2, where it hits the cigarette in the position S2 on a point, for example a lateral point, of the exposed half of its cross-section, thus making a hole therein. It is useful to recall that the cigarette being in the position S2 on the second drum 2, in correspondence of the second perforating head T2, is already provided with holes in the other half of its cross-section. Through the bundle of optical fibres 12 the laser ray is conveyed again to the first perforating head, where it hits the cigarette having been in the meantime moved from the position S1 toward the position S1′, on the first intermediate position shown by dash-and-dot lines, downstream of the first position S1, thus making another hole in the cigarette wrapper, at a point which relatively to the first, is more toward the summit of the exposed half of the cigarette cross-section. The laser ray is then conveyed through the bundle of optical fibres 22 to the second perforating head T2, where another hole is made in the exposed half of the cross-section of the cigarette having been in the meantime moved from the position S2 toward the position S2′, at the first intermediate position shown by dash-and-dot lines. The operation is repeated still in an alternate manner for the two perforating heads T1 and T2, and owing to the action of the laser rays issuing from the bundles of optical fibres 13,14,15 and 23,24,25, at each one of the other intermediate cigarette positions between the positions S1 and S1′, and between the positions S2 and S2′, and finally at the end positions S1′ and S2′. In the position S1′, only that half of the cross-section of cigarette S which is turned toward the first perforating head T1 is provided with holes, while in the position S2' the cigarette having just passed before the second perforating head T2, is provided with holes over its entire periphery and is then discharged from the rotary fluted drum 2. With the subsequent passage of the laser ray over the inlet ends of the bundles of optical fibres 11-15 and 21-25, the cycle is repeated for the next-following cigarettes taking the positions S1 and S2.

In the embodiment according to Figures 4 and 5, the two perforating heads T1 and T2 are similar, so that only the first perforating head T1 associated with the first fluted rotary drum 1 is shown in more detail in Figure 5. In this embodiment, the bundles of optical fibres with their outlet ends terminating with a focusing lens L and being located on the inward concave surface B1,B2 of the two perforating heads T1,T2, are all designated by the reference numeral 30 and are all gathered up in an optical fibre cable C1,C2. The two cables C1 and C2 may be either connected to only one laser rays emitting source (not shown) or each cable C1,C2 may be connected to its own laser rays emitting source (also not shown). This or these laser rays emitting source or sources are of the pulse type and simultaneously send a laser ray through all the bundles of optical fibres 30 connected to one perforating head T1 or T2, at the moment in which a cigarette S carried by drum 1 or by drum 2 is in a perforation position in front of the respective perforating head T1 or T2. More particularly, in the shown embodiment the outlet ends of the bundles of optical fibres 30, which are provided with the focusing lenses L, are distributed over a cylindrical concave surface B1,B2 of the perforating head T1,T2 and emit substantially radial laser rays which by the lenses L are focalized on the surface of the wrapper of cigarette S once this cigarette has been located in a perforation position substantially co-axial to the cylindrical surface B1,B2. Therefore, in the embodiment according to Figures 4 and 5, at the first perforating head T1 associated with drum 1, the holes in the wrapper of each cigarette S are all simultaneously made in correspondence of one half of the cross-section of cigarette S. The holes in the other half of the cross-section of cigarette S are also simultaneously made at the second perforating head T2 associated with drum 2. The two perforating heads T1,T2 preferably work in an alternate manner when they are connected to only one laser rays emitting source. When each one of the perforating heads T1,T2 is fed by its own independent laser rays emitting source, these heads may be operated even simultaneously.

## Claims

1. A method for perforating cigarettes, or the like, by means of laser rays and by causing each cigarette to be moved relatively to at least one stationary laser ray perforating head, so as to have a ring of holes made in the cigarette wrapper all around the same, comprising the following steps:

   a) a cigarette (S) is moved transversely to its axis along a first path by a first cigarette-conveying movable support (1) leaving the peripheral surface exposed of substantially one half of the cigarette cross-section,

   b) the holes in the cigarette wrapper are made in the said exposed one half of the cigarette cross-section by a first stationary laser rays perforating head (T1) while the cigarette is being conveyed along the said first path,

   c) the cigarette (S) with its wrapper having been perforated in the one half of the cigarette cross section, is transferred onto a second cigarette-conveying movable support (2) moving the cigarette transversely to its axis along a second path, and leaving the peripheral surface exposed substantially in correspondence to the other half of the cigarette cross-section,

   d) the holes in the cigarette wrapper are made in the said exposed other half of the cigarette cross-section by a second stationary laser rays perforating head (T2) while the cigarette (S) is being conveyed along the said second path.

2. The method according to claim 1, characterized in that the cigarette (S) is transferred from the first cigarette-conveying movable support (1) directly to the second cigarette-conveying movable support (2) facing the first.

3. The method according to claim 1, characterized in that the holes in the cigarette wrapper are made the one after the other in each half of the cigarette cross-section.

4. The method according to claim 1, characterized in that the holes made in the wrapper of a cigarette (S) over the one half of the cigarette cross-section on the first cigarette path, are made alternately to the holes made in the wrapper of another cigarette (S) over the other half of the cigarette cross-section on the second cigarette path.

5. A device for carrying out the method according to any one of claims 1 to 4, comprising:

a) a first rotary conveying drum (1) carrying each of the cigarettes (S) in one respective peripheral suction flute thereof, and conveying the cigarettes over a first cigarette path, which transfers the cigarettes to a second rotary conveying drum (2) carrying each of the cigarettes (S) in one respective suction flute thereof, and conveying the cigarettes over a second cigarette path,

b) two stationary laser rays perforating heads (T1, T2), each being associated in correspondence with each rotary conveying drum (1, 2) and comprising a plurality of successive laser rays emitting means circumferentially distributed over the exposed respective half of the cigarette cross-section and being provided with focusing lenses (L) for localizing the laser rays onto the peripheral surface of each cigarette (S) travelling in front of the laser rays perforating head,

c) at least one laser rays emitting source (28) which through laser rays distributing and guiding means (27, 29; 11-15; 21-25; C1, C2, 30) is connected to the perforating heads (T1, T2).

6. The device according to claim 5, characterized in that the means for guiding the laser rays between the respective emitting source (28) and the perforating heads (T1,T2) at least partly consist of bundles of optical fibres (11-15; 21-25; C1,C2,30), and the laser rays emitting source (28) consists of a continuous or a pulse emitting source generating a laser light which is adapted for being conveyed by means of fibre optic.

7. The device according to any one of claims 5 or 6, characterized in that the laser rays emitting means (L) of each perforating head (T1,T2) are arranged the one after the other in the direction of movement (F1,F2) of cigarettes (S), and are so oriented and focalized as to generate laser rays hitting the exposed half of the cross-section of a cigarette (S) passing in front of the perforating head (T1,T2), at angularly spaced apart different points, during a predetermined step of cigarette (S) in front of the perforating head (T1,T2), while the means (27,29) for distributing the laser ray or rays generated by the emitting source (28) are so provided that they feed the one after the other the laser rays emitting means of each perforating head (T1,T2) during the said cigarette step.

8. The device according to claim 7, characterized in that the laser rays emitting means of each perforating head (T1,T2) consist of focusing lenses (L) associated with the outlet ends of bundles of optical fibres (11-15; 21-25) having their inlet ends arranged over a circle arc on the cylindrical surface (26) of a distributor (27), and the arc of the inlet ends of the bundles of optical fibres (11-15; 21-25) is swept by the laser ray generated by a preferably continuous laser rays emitting source (28) and deflected by a polygonal rotary reflector (29).

9. The device according to claim 8, characterized in that the inlet ends of the bundles of optical fibres (11-15) connected to the first perforating head (T1) are alternated on the cylindrical surface (26) of distributor (27) with the inlet ends of the bundles of optical fibres (21-25) connected to the second perforating head (T2).

10. The device according to any one of claims 5 or 6, characterized in that the laser rays emitting means (L) of each perforating head (T1,T2) are arranged the one after the other in the direction of movement (F1,F2) of cigarettes (S), and are so oriented and focalized as to generate laser rays hitting the exposed half of the cross-section of a cigarette passing in front of the perforating head, at angularly spaced apart different points, yet simultaneously, in only one position of cigarette (S) in front of the perforating head (T1,T2), while the means for distributing the laser ray or rays generated by the emitting source are so provided that they simultaneously feed all the laser rays emitting means of each perforating head (T1,T2) in the said position of the cigarette.

11. The device according to claim 10, characterized in that the laser rays emitting means of each perforating head (T1,T2) consist of focusing lenses (L) associated with the outlet ends of bundles of optical fibres (30), and arranged over a circle arc on the cylindrical surface (B1,B2) of the respective perforating head (T1,T2), and oriented radially.

**Revendications**

1. Un procédé pour perforer des cigarettes, ou des objets semblables, au moyen de faisceaux laser, et en déplaçant chaque cigarette par rapport à au moins une tête de perforation à faisceaux laser fixe, de façon à former un anneau de trous dans l'enveloppe de cigarette, tout autour de cette dernière, comprenant les étapes suivantes :

a) on déplace une cigarette (S) transversalement à son axe, le long d'un premier chemin, au moyen d'un premier support mobile de transport de cigarettes (1) qui laisse à nu une partie de la surface périphérique de la cigarette correspondant pratiquement à une moitié de la section transversale de la cigarette,

b) on forme les trous dans l'enveloppe de cigarette, dans la moitié à nu de la section transversale de la cigarette, au moyen d'une première tête de perforation à faisceaux laser fixe (T1), pendant que la cigarette est transportée le long du premier chemin,

c) on transfère la cigarette (S), dont l'enveloppe a été perforée dans une moitié de la section transversale de la cigarette, vers un second support mobile de transport de cigarettes (2) qui déplace la cigarette transversalement à son axe le long d'un second chemin, et qui laisse à nu la surface périphérique de la cigarette qui correspond pratiquement à l'autre moitié de la section transversale de la cigarette,

d) on forme les trous dans l'enveloppe de la cigarette, dans cette autre moitié à nu de la section transversale de la cigarette, au moyen d'une seconde tête de perforation à faisceaux laser fixe (T2), pendant que la cigarette (S) est transportée le long du second chemin.

2. Le procédé selon la revendication 1, caractérisé en ce que la cigarette (S) est transférée directement du premier support mobile de transport de cigarettes (1) vers le second support mobile de transport de cigarettes (2) qui fait face au premier.

3. Le procédé selon la revendication 1, caractérisé en ce qu'on forme les trous dans l'enveloppe de la cigarette l'un après l'autre dans chaque moitié de la section transversale de la cigarette.

4. Le procédé selon la revendication 1, caractérisé en ce que les trous qui sont formés dans l'enveloppe d'une cigarette (S), dans une moitié de la section transversale de la cigarette, sur le premier chemin de cigarette, sont formés en alternance avec les trous formés dans l'enveloppe d'une autre cigarette (S), dans l'autre moitié de la section transversale de la cigarette, sur le second chemin de cigarette.

5. Un dispositif pour mettre en oeuvre le procédé selon l'une quelconque des revendications 1 à 4, comprenant :

a) un premier tambour de transport tournant (1) qui transporte chacune des cigarettes (S) dans une cannelure d'aspiration périphérique respective de ce tambour, et qui achemine les cigarettes sur un premier chemin de cigarette, ce tambour transférant les cigarettes vers un second tambour de transport tournant (2) qui transporte chacune des cigarettes (S) dans une cannelure d'aspiration respective de ce tambour, et qui achemine les cigarettes sur un second chemin de cigarette,

b) deux têtes de perforation à faisceaux laser fixes (T1, T2), chacune d'elles étant associée, en correspondance, avec chaque tambour de transport tournant (1, 2), et comprenant un ensemble de moyens d'émission de faisceau laser successifs, répartis dans la direction de la circonférence sur la moitié à nu respective de la section transversale de la cigarette, et comportant des lentilles de focalisation (L) pour localiser les faisceaux laser sur la surface périphérique de chaque cigarette (S) qui se déplace devant la tête de perforation à faisceaux laser,

c) au moins une source d'émission de faisceau laser (28) qui est reliée aux têtes de perforation (T1, T2) par l'intermédiaire de moyens de guidage et de distribution de faisceaux laser (27, 29; 11-15; 21-25; C1, C1, 30).

6. Le dispositif selon la revendication 5, caractérisé en ce que les moyens destinés à guider les faisceaux laser entre la source d'émission respective (28) et les têtes de perforation (T1, T2), sont constitués au moins partiellement par des faisceaux de fibres optiques (11-15; 21-25; C1, C2, 30), et la source d'émission de faisceau laser (28) consiste en une source d'émission continue ou fonctionnant en régime d'impulsions, qui génère une lumière laser qui est adaptée pour être acheminée au moyen de fibres optiques.

7. Le dispositif selon l'une quelconque des revendications 5 ou 6, caractérisé en ce que les moyens d'émission de faisceau laser (L) de chaque tête de perforation (T1, T2) sont disposés l'un après l'autre dans la direction du mouvement (F1, F2) de cigarettes (S), et ils sont orientés et focalisés de façon à produire des faisceaux laser qui tombent sur la moitié à nu de la section transversale d'une cigarette (S) qui passe devant la tête de perforation (T1, T2), en différents points présentant un espacement angulaire mutuel, pendant un pas de déplacement prédéterminé d'une cigarette (S) devant la tête de perforation (Tl, T2), tandis que les moyens (27, 29) destinés à distribuer le ou les faisceaux laser que génère la source d'émission (28) sont conçus de façon à alimenter les uns après les autres les moyens d'émission de faisceau laser de chaque tête de perforation (Tl, T2), pendant le pas de déplacement de la cigarette.

8. Le dispositif selon la revendication 7, caractérisé en ce que les moyens d'émission de faisceau laser de chaque tête de perforation (Tl, T2) sont constitués par des lentilles de focalisation (L) qui sont associées aux extrémités de sortie de faisceaux de fibres optiques (11-15; 21-25) dont les extrémités d'entrée sont disposées sur un arc de cercle sur la surface cylindrique (26) d'un distributeur (27), et l'arc des extrémités d'entrée des faisceaux de fibres optiques (11-15; 21-25) est balayé par le faisceau laser que génère une source d'émission de faisceau laser (28), de préférence continue, et qui est dévié par un réflecteur polygonal tournant (29).

9. Le dispositif selon la revendication 8, caractérisé en ce que les extrémités d'entrée des faisceaux de fibres optiques (11-15) qui sont reliées à la première tête de perforation (T1) sont disposées en alternance sur la surface cylindrique (26) du distributeur (27) avec les extrémités d'entrée des faisceaux de fibres optiques (21-25) qui sont reliés à la seconde tête de perforation (T2).

10. Le dispositif selon l'une quelconque des revendications 5 ou 6, caractérisé en ce que les moyens d'émission de faisceau laser (L) de chaque tête de perforation (T1, T2) sont disposés les uns après les autres dans la direction du mouvement (F1, F2) de cigarettes (S), et ils sont orientés et focalisés de façon à générer des faisceaux laser qui tombent sur la moitié à nu de la section transversale d'une cigarette passant devant la tête de perforation, en différents points présentant un espacement angulaire mutuel, mais de façon simultanée, dans une seule position d'une cigarette (S) devant la tête de perforation (T1, T2), tandis que les moyens qui sont destinés à distribuer le ou les faisceaux laser que génère la source d'émission, sont conçus de façon à alimenter simultanément tous les moyens d'émission de faisceau laser de chaque tête de perforation (T1, T2) dans la position précitée de la cigarette.

11. Le dispositif selon la revendication 10, caractérisé en ce que les moyens d'émission de faisceau laser dans chaque tête de perforation (T1, T2) sont constitués par des lentilles de focalisation (L) associées aux extrémités de sortie de faisceaux de fibres optiques (30), et disposées sur un arc de cercle sur la surface cylindrique (B1, B2) de la tête de perforation respective (T1, T2), et orientées de façon radiale.

## Patentansprüche

1. Verfahren zum Perforieren von Zigaretten oder dergleichen mit Hilfe von Laserstrahlen und dadurch, daß man jede Zigarette sich relativ zu zumindest einem stationären Laserstrahl-Perforierungskopf bewegen läßt, so daß man einen Ring von Löchern erhält, die in der Zigarettenhülse und ganz um diese herum hergestellt werden, mit den folgenden Schritten:
   a) eine Zigarette (S) wird quer zu ihrer Achse entlang eines ersten Weges durch eine erste, die Zigarette transportierende, bewegliche Halterung (1) bewegt, welche die Umfangsoberfläche von im wesentlichen einer Hälfte des Zigarettenquerschnittes freiläßt,
   b) die Löcher in der Zigarettenhülse werden in der einen freigelassenen Hälfte des Zigarettenquerschnittes durch einen ersten, stationären Laserstrahlen-Perforierkopf (T1) hergestellt, während die Zigarette entlang des ersten Weges transportiert wird,
   c) die Zigarette (S), deren Hülse auf einer Seite des Zigarettenquerschnittes perforiert worden ist, wird übergeben an eine zweite bewegbare, die Zigarette transportierende Halterung (2), welche die Zigarette quer zu ihrer Achse eines zweiten Pfades bewegt und welche die Umfangsoberfläche freiläßt, welche im wesentlichen der anderen Hälfte des Zigarettenquerschnittes entspricht,
   d) die Löcher in der Zigarettenhülse werden in der freigelassenen anderen Hälfte des Zigarettenquerschnittes durch einen zweiten, stationären Laserstrahlen-Perforierkopf (T2) hergestellt, während die Zigarette (S) entlang des zweiten Pfades transportiert wird.

2. Verfahren nach Anspruch 1, dadurch gekennzeichnet, daß die Zigarette (S) von der ersten, die Zigarette transportierenden, beweglichen Halterung (1) direkt der zweiten, die Zigarette transportierenden, beweglichen Halterung (2) übergeben wird, welche der ersten gegenüberliegt.

3. Verfahren nach Anspruch 1, dadurch gekennzeichnet, daß die Löcher in der Zigarettenhülse in jeder Hälfte des Zigarettenquerschnittes eines nach dem anderen hergestellt werden.

4. Verfahren nach Anspruch 1, dadurch gekennzeichnet, daß die Löcher in der Hülse der Zigarette (S) über die eine Hälfte des Zigarettenquerschnittes auf dem ersten Zigarettenweg abwechselnd mit den Löchern in der Hülse einer weiteren Zigarette (S) über die andere Hälfte des Zigarettenquerschnittes auf dem zweiten Zigarettenweg hergestellt werden.

5. Vorrichtung zur Durchführung des Verfahrens nach einem der Ansprüche 1 bis 4 mit:
a) einer ersten, sich drehenden Transporttrommel (1), welche jeweils eine der Zigaretten (S) in einer entsprechenden, am Umfang angebrachten Saugrinne der Trommel trägt und die Zigaretten entlang eines ersten Zigarettenweges transportiert, welcher die Zigaretten zu einer zweiten, sich drehenden Transporttrommel (2) überführt, welche jeweils eine der Zigaretten (S) in einer entsprechenden Saugrinne der Trommel trägt und die Zigaretten entlang eines zweiten Zigarettenweges transportiert,
b) zwei stationären Laserstrahlen-Perforierköpfen (T1, T2), von denen jeweils einer der sich drehenden Transporttrommeln (1, 2) entsprechend zugeordnet ist und welche eine Mehrzahl von aufeinanderfolgenden Einrichtungen zum Emittieren von Laserstrahlen aufweisen, die in Umfangsrichtung über die entsprechende freigelassene Hälfte des Zigarettenquerschnittes verteilt sind und mit Fokussierlinsen (L) versehen sind, um die Laserstrahlen auf die Umfangsoberfläche jeder Zigarette (S) zu lokalisieren, die vor dem Laserstrahlen-Perforierkopf vorüberläuft,
c) zumindest einer Quelle (28), welche Laserstrahlen aussendet und welche über Laserstrahlenverteilungs- und -führungseinrichtungen (27, 29; 11-15; 21-25; C1, C2, 30) mit den Perforierköpfen (T1, T2) verbunden ist.

6. Vorrichtung nach Anspruch 5, dadurch gekennzeichnet, daß die Einrichtungen zum Führen der Laserstrahlen zwischen der entsprechenden Aussendequelle (28) und den Perforierköpfen (T1, T2) zumindest teilweise aus Bündeln von optischen Fasern (11-15: 21-25; C1, C2, 30) bestehen, und daß die Aussendequelle (28) für die Laserstrahlen aus einer kontinuierlichen oder gepulsten Strahlungsquelle besteht, welche Laserlicht erzeugt, das darauf ausgelegt ist, mit Hilfe einer Faseroptik übertragen zu werden.

7. Vorrichtung nach einem der Ansprüche 5 oder 6, dadurch gekennzeichnet, daß die Aussendeeinrichtungen (L) für die Laserstrahlen jedes Perforierkopfes (T1, T2) hintereinander in Bewegungsrichtung (F1, F2) der Zigaretten (S) angeordnet und so ausgerichtet und fokussiert sind, daß sie Laserstrahlen erzeugen, die die freiliegende Hälfte des Querschnittes einer Zigarette (S), welche vor dem Perforierkopf (T1, T2) vorbeilaufen unter Winkelabständen an verschiedenen Punkten treffen während eines vorbestimmten Schrittes einer Zigarette (S) vor dem Perforierkopf (T1, T2), während die Einrichtungen (27, 29) zum Verteilen des Laserstrahles oder der Strahlen, welche von der Strahlungsquelle (28) erzeugt werden, so bereitgestellt werden, daß sie die hintereinanderliegenden Strahlungseinrichtungen der Laserstrahlen jedes Perforierkopfes (T1, T2) während des betreffenden Zigarettenschrittes zuführen.

8. Vorrichtung nach Anspruch 7, dadurch gekennzeichnet, daß die Aussendeeinrichtungen für die Laserstrahlen jedes Perforierkopfes (T1, T2) aus Fokussierlinsen (L) bestehen, die den Auslaßenden von Bündeln von optischen Fasern (11-15; 21-25) zugeordnet sind, deren Einlaßenden über einen Kreisbogen an der zylindrischen Oberfläche (26) eines Verteilers (27) angeordnet sind, und daß der Bogen der Einlaßenden von Bündeln optischer Fasern (11-15; 21-25) von dem Laserstrahl überstrichen wird, der von einer vorzugsweise kontinierliche Laserstrahlen aussendenden Quelle (28) erzeugt und von einem polygonalen, sich drehenden Reflektor (29) abgelenkt wird.

9. Vorrichtung nach Anspruch 8, dadurch gekennzeichnet, daß die Einlaßenden der Bündel optischer Fasern (11-15), welche mit dem ersten Perforierkopf (T1) verbunden sind, auf der zylindrischen Oberfläche (26) des Verteilers (27) mit den Einlaßenden der Bündel optischer Fasern (21-25) abwechseln, welche mit dem zweiten Perforierkopf (T2) verbunden sind.

10. Vorrichtung nach einem der Ansprüche 5 oder 6, dadurch gekennzeichnet, daß die Aussendeeinrichtungen (L) für die Laserstrahlen jedes Perforierkopfes (T1, T2) hintereinander in Bewegungsrichtung (F1, F2) der Zigaretten (S) angeordnet und so orientiert und fokussiert sind, daß sie Laserstrahlen erzeugen, welche die freigelassene Hälfte des Querschnittes einer Zigarette, die vor dem Perforierkopf vorbeiläuft, an verschiedenen, winkelmäßig beabstandeten Punkten trifft, jedoch gleichzeitig in nur einer Stellung der Zigarette (S) vor dem Perforierkopf (T1, T2), während die Einrichtungen zum Verteilen des Laserstrahls oder der Strahlen, welche von der Strahlungsquelle erzeugt werden, so bereitgestellt werden, daß sie gleichzeitig alle Einrichtungen zum Aussenden der Laserstrahlen an jedem Perforierkopf (T1, T2) in der betreffenden Position der Zigarette versorgen.

11. Vorrichtung nach Anspruch 10, dadurch gekennzeichnet, daß die Aussendeeinrichtungen für die Laserstrahlen jedes Perforierkopfes (T1, T2) aus Fokussierlinsen (L) bestehen, die zu den Auslaßenden von Bündeln optischer Fasern (30) gehören und über einen Kreisbogen auf der zylindrischen Oberfläche (B1, B2) des betreffenden Perforierkopfes (T1, T2) angeordnet und in radialer Richtung ausgerichtet sind.

Fig.1

T2  21  L  B2  S  F2  S2  S2'  L  22  23  24  25

*Fig.2*

1  F1  S1'  S1  S  L  B1  L  T1  15  14  13  12  11

*Fig.3*

EP 0 304 559 B1

Fig.5

Fig.4